# EUROPÄISCHE PATENTANMELDUNG

(11) **EP 4 312 140 A1**
(43) Veröffentlichungstag der Anmeldung: **31.01.2024**
(21) Anmeldenummer: 22189098.1
(22) Anmeldetag: 05.08.2022
(51) Int. Cl.: G06F 21/57, G05B 19/05, G06F 8/41

(54) **VERFAHREN ZUM PROGRAMMIEREN EINER SPEICHERPROGRAMMIERBAREN STEUERUNG MITTELS EINES AUSFÜHRBAREN STEUERPROGRAMMS UND SPEICHERPROGRAMMIERBARE STEUERUNGSANLAGE**

(30) Priorität: 29.07.2022 DE 102022207883
(71) Anmelder: Siemens Aktiengesellschaft, 80333 München (DE)
(72) Erfinder: Falk, Rainer, 85586 Poing (DE); Feist, Christian Peter, 80689 München (DE); Pyka, Stefan, 85570 Markt Schwaben (DE); Zeschg, Thomas, 81543 München (DE)
(74) Vertreter: Siemens Patent Attorneys

(57) **Zusammenfassung**

Bei dem Verfahren zum Programmieren einer speicherprogrammierbaren Steuerung mittels eines ausführbaren Steuerprogramms wird ein Zwischenprogrammtext in einer vertrauenswürdigen Ausführungsumgebung zum ausführbaren Steuerprogramm kompiliert und die speicherprogrammierbare Steuerung wird mit dem ausführbaren Steuerprogramm programmiert.

Die Speicherprogrammierbare Steuerungsanlage ist zur Ausführung eines solchen Verfahrens zum Programmieren einer speicherprogrammierbaren Steuerung mittels eines ausführbaren Steuerprogramms ausgebildet und weist eine speicherprogrammierbaren Steuerung und eine vertrauenswürdigen Ausführungsumgebung auf, wobei die vertrauenswürdige Ausführungsumgebung einen Kompilator aufweist, welcher zur Kompilation eines Zwischenprogrammtextes ausgebildet ist, wobei die speicherprogrammierbare Steuerungsanlage einen Projektierer aufweist, welcher ausgebildet ist, den kompilierten Zwischentext auf die speicherprogrammierbare Steuerung zu laden.

## Beschreibung

Die Erfindung betrifft ein Verfahren zum Programmieren einer speicherprogrammierbaren Steuerung mittels eines ausführbaren Steuerprogramms und eine speicherprogrammierbare Steuerungsanlage.

Es sind speicherprogrammierbare Steuerungen bekannt, bei welchen ein Programmcode, eine sogenannte Projektierung, in einer Hochsprache erstellt wird und in einem Projektierungs-Tool in einen hardwareunabhängigen Zwischencode übersetzt wird, der auch als Bytecode bekannt ist und im Rahmen dieser Anmeldung auch als Zwischenprogrammtext bezeichnet wird. Die Projektierung realisiert z. B. einen Baustein, indem der hardwareunabhängige Zwischencode auf die Steuerung geladen wird und dort in einen ausführbaren Binärcode, also eines ausführbaren Steuerprogramms, für die jeweils vorhandene Prozessor-Hardware übersetzt wird.

Grundsätzlich kann der Baustein, d. h. dessen zugrundeliegender Programmcode, geschützt werden, etwa mittels eines Know-How-Schutzes, mittels Block-Privacy oder mittels eines Kopierschutzverfahrens. Allerdings wäre ein besserer Schutz wünschenswert.

Es besteht daher ein Bedarf an einem verbesserten Generieren eines ausführbaren Programmcodes auf einer speicherprogrammierbaren Steuerung, welche physikalisch oder virtualisiert realisiert sein kann. Insbesondere sollen die Integrität und/oder die Vertraulichkeit eines ausführbaren Steuerprogramms einer speicherprogrammierbaren Steuerung bei einer Programmcode-Übersetzung besser gewährleistet werden können. Vor diesem Hintergrund des Standes der Technik ist es daher Aufgabe der Erfindung, ein verbessertes Verfahren zum Programmieren einer speicherprogrammierbaren Steuerung anzugeben. Ferner ist es Aufgabe der Erfindung, eine verbesserte speicherprogrammierbare Steuerungsanlage anzugeben.

Diese Aufgabe der Erfindung wird mit einem Verfahren zum Programmieren einer speicherprogrammierbaren Steuerung mit den in Anspruch 1 angegebenen Merkmalen sowie mit einer speicherprogrammierbaren Steuerungsanlage mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Programmieren einer speicherprogrammierbaren Steuerung mittels eines ausführbaren Steuerprogramms wird ein Zwischenprogrammtext, zumindest zum Teil, in einer vertrauenswürdigen Ausführungsumgebung zum ausführbaren Steuerprogramm kompiliert und die speicherprogrammierbare Steuerung wird mit dem ausführbaren Steuerprogramm programmiert.

Mittels des erfindungsgemäßen Verfahrens wird der Zwischenprogrammtext, zumindest zu einem Teil, in einer vertrauenswürdigen Ausführungsumgebung zum ausführbaren Steuerprogramm kompiliert, d. h. übersetzt. Mit anderen Worten, zumindest ein Teil des Zwischenprogrammtexts wird bei dem erfindungsgemäßen Verfahren in der vertrauenswürdigen Ausführungsumgebung zum ausführbaren Steuerprogramm kompiliert.

Dies hat den Vorteil, dass die Übersetzung des Zwischenprogrammtexts in einer vertrauenswürdigen, d. h. speziellen, manipulations- und/oder vertraulichkeitsgeschützten, Ausführungsumgebung erfolgt. Somit ist eine Gefahr einer Manipulation des Zwischenprogrammtexts und/oder ein Kompilieren des Zwischenprogrammtexts zum ausführbaren Steuerprogramm wirksam reduziert. Eine Integrität des ausführbaren Steuerprogramms ist erfindungsgemäß folglich besser gewährleistet. Zudem können vorteilhaft bei einem geschützten Zwischentext die zum Kompilieren erforderlichen Schutzfunktionen in der vertrauenswürdigen Ausführungsumgebung selbst realisiert sein. Eine Vertraulichkeit des Zwischenprogrammtexts ist erfindungsgemäß folglich gegenüber dem Stand der Technik besser gewährleistet. Dies ist insbesondere in solchen Fällen besonders vorteilhaft, in denen die speicherprogrammierbare Steuerung softwarebasiert realisiert ist und auf einer offenen Compute-Plattform, wie insbesondere einem Industrial Personal Computer, ausgeführt wird.

Die vertrauenswürdige Ausführungsumgebung kann dabei eine auf einem Prozessorschaltkreis realisierte Hardware-geschützte vertrauenswürdige Ausführungsumgebung sein. Besonders bevorzugt ist auch die speicherprogrammierbare Steuerung auf einem Prozessorschaltkreis realisiert und der Prozessorschaltkreis, auf welchem die Hardware-geschützte vertrauenswürdige Ausführungsumgebung realisiert ist, ist dabei vorzugsweise derselbe Prozessorschaltkreis, auf dem die speicherprogrammierbare Steuerung realisiert ist. Vertrauenswürdige Ausführungsumgebung und speicherprogrammierbare Steuerung können alternativ und ebenfalls bevorzugt auf separaten Prozessorschaltkreisen realisiert sein. Das kompilierte ausführbare Steuerprogramm wird dabei vorzugsweise in der regulären Ausführungsumgebung eines Prozessorschaltkreises ausgeführt.

Beim erfindungsgemäßen Verfahren kann das Kompilieren bei einem Laden des Zwischenprogrammtexts und/oder vor einer erstmaligen Ausführung des ausführbaren Steuerprogramms und/oder bei einem Wechsel von einem Konfigurationsmodus der speicherprogrammierbaren Steuerung zu einem operativen Betriebsmodus der speicherprogrammierbaren Steuerung, bei einem Systemstart, d. h. einem Booten, der speicherprogrammierbaren Steuerung und/oder vor einem Start des ausführbaren Steuerprogramms und/oder beim Start einer, insbesondere realen oder virtualisierten, speicherprogrammierbaren Steuerung erfolgen.

Bevorzugt ist bei dem erfindungsgemäßen Verfahren der Zwischenprogrammtext ein hardwareunabhängiger Zwischenprogrammtext. In dieser Weiterbildung der Erfindung wird der hardwareunabhängige Zwischenprogrammtext bevorzugt in ein hardwarespezifisches, ausführbares Steuerprogramm übersetzt. Das Kompilieren des Zwischenprogrammtexts gewährleistet folglich die Abstimmung des ausführbaren Steuerprogramms auf die Hardware der speicherprogrammierbaren Steuerung.

Bevorzugt bildet oder umfasst bei dem Verfahren gemäß der Erfindung das ausführbare Steuerprogramm einen ausführbaren Binärcode. Alternativ und ebenfalls bevorzugt kann es sich bei dem ausführbaren Steuerprogramm auch um ein anderes ausführbares Dateiformat handeln.

In einer vorteilhaften Weiterbildung des Verfahrens gemäß der Erfindung ist die vertrauenswürdige Ausführungsumgebung ein Trusted Execution Environment.

Besonders bevorzugt ist oder umfasst die vertrauenswürdige Ausführungsumgebung Intel Software Guard Extensions (Intel SGX) und/oder Intel TME-MK, welche bislang auch als MKTME bekannt sind, und/oder AMD SEV und/oder eine ARM Trustzone und/oder ein Hardware Secure Element und/oder einen separaten Security-Prozessor und/oder einen in einem integrierten Schaltkreis integrierten separaten Security-Prozessor-Kern und/oder eine Confidential-Computing-Ausführungsumgebung einer Cloud-Infrastruktur, etwa einer Backend Cloud und/oder Edge Cloud.

In einer bevorzugten Weiterbildung des erfindungsgemäßen Verfahrens wird das ausführbare Steuerprogramm mittels eines Kompilierers kompiliert und der Kompilierer ist in der vertrauenswürdigen Ausführungsumgebung kryptographisch geschützt.

Geeignet ist bei dem Verfahren gemäß der Erfindung der Kompilierer mittels Hardware in der vertrauenswürdigen Ausführungsumgebung geschützt.

Bei dem erfindungsgemäßen Verfahren wird vorzugsweise eine solche vertrauenswürdige Ausführungsumgebung herangezogen, die insbesondere eingerichtet ist, hardwarebasiert einen in der vertrauenswürdigen Ausführungsumgebung ausgeführten Kompilierer, im Rahmen dieser Beschreibung auch als Compiler bezeichnet, zum Kompilieren des Zwischenprogrammtexts kryptographisch zu schützen, d. h. einen kryptographischen Integritäts- und/oder Vertraulichkeitsschutz zu gewährleisten. Dazu wird vorzugsweise zumindest ein kryptographischer Schlüssel herangezogen, der spezifisch für die Instanz der vertrauenswürdigen Ausführungsumgebung ist, d.h. spezifisch für einen bestimmten in der vertrauenswürdigen Ausführungsumgebung ausgeführten Programmcode, insbesondere dem Programmcode des Compilers. Die Verschlüsselungsfunktionen und die Schlüsselspeicherung und Schlüsselbildung können dabei hardwarebasiert insbesondere in einem Prozessor oder einem System-on-Chip der vertrauenswürdigen Ausführungsumgebung erfolgen, sodass der Compiler vor softwarebasierten Angriffen geschützt sein kann. Der zum Schutz des Compilers verwendete Schlüssel ist dabei nur dann nutzbar, wenn gerade dieser entsprechende Compiler in der vertrauenswürdigen Ausführungsumgebung ausgeführt wird. Soll hingegen ein anderer Compiler ausgeführt werden, so ist der Schlüssel nicht nutzbar und folglich der Zwischenprogrammtext mit einem anderen Compiler nicht manipulierbar oder entschlüsselbar. Somit kann gewährleistet werden, dass keine andere Software den Zwischenprogrammtext oder das ausführbare Steuerprogramm manipulieren kann. Die vertrauenswürdige Ausführungsumgebung kann dazu eine kryptographische Prüfsumme, insbesondere eine digitale Signatur und/oder einen Message Authentication Code und/oder einen kryptographischen Hash-Wert, des Compilers zu prüfen, bevor der Compiler in der vertrauenswürdigen Ausführungsumgebung ausgeführt wird. Somit kann der Compiler nicht manipuliert werden.

Erfindungsgemäß kann also der in der vertrauenswürdigen Ausführungsumgebung ausgeführte Compiler von anderer auf der speicherprogrammierbaren Steuerung ausgeführten Software isoliert werden. Da sich gemäß der Erfindung eine solche Isolation über kryptographische Verfahren umsetzen lässt, ist deren Verlässlichkeit höher als bei herkömmlichen Isolations-Verfahren, bei denen lediglich über eine Speicherzugriffskontrolle ein Zugriff auf bestimmte Speicherbereiche durch eine Memory Management Unit gesperrt wird.

Vorzugsweise wird bei dem erfindungsgemäßen Verfahren das kompilierte ausführbare Steuerprogramm mittels einer kryptographischen Attestierungsinformation attestiert.

Eine solche kryptographische Attestierungsinformation enthält vorzugsweise eine Information, in welcher Art von vertrauenswürdiger Ausführungsumgebung das Kompilieren erfolgt ist, insbesondere eine Information, dass es sich überhaupt um eine vertrauenswürdige Ausführungsumgebung handelt und vorzugsweise eine Information über die technische Realisierungsart der vertrauenswürdigen Ausführungsumgebung. Vorzugsweise kann die kryptographische Attestierungsinformation eine Information zu einer Instanz, etwa eine Identifikationsinformation, der vertrauenswürdigen Ausführungsumgebung und/oder einen Zeitpunkt des Kompilierens enthalten. Optional und vorteilhaft kann die kryptographische Attestierungsinformation eine Information zu einer Instanz des Kompilierers enthalten. Vorzugsweise umfasst die kryptographische Attestierungsinformation eine Information zum übersetzten Zwischenprogrammtext, also zum Input des Kompilierens, insbesondere einen Bezeichner und/oder einen kryptographischen Hash-Wert und/oder eine Quelle, etwa einen Downloadserver und/oder eine URL, mittels welchem oder welcher der Programmcode bezogen wurde und/oder eine Information, ob ein Baustein-Schutz des Zwischenprogrammtexts vorlag. Vorteilhaft kann die kryptographische Attestierungsinformation eine Kompilierinformation, insbesondere beim Kompilieren aktivierte Security-Optionen zur Härtung des ausführbaren Steuerprogramms, vorzugsweise eine Shadow-Stack-Option und/oder eine Memory-Layout-Randomization-Option und/oder ASLR-Option und/oder eine Pointer-Authentication-Option und/oder eine Nutzung von Branch Target Indicators, umfassen.

Zweckmäßig und optional kann die kryptographische Attestierungsinformation eine Integritätsprüfinformation, etwa einen oder mehrere Hash-Werte, des generierten ausführbaren Steuerprogramms, also des Outputs beim Kompilieren, umfassen. Diese Integritätsprüfinformation kann beim Start oder während der Ausführung des ausführbaren Steuerprogramms überprüft werden, um die Integrität des ausführbaren Steuerprogramms zu überwachen. Falls durch einen Angriff, etwa durch Ausnutzen einer Schwachstelle, das im Arbeitsspeicher befindliche, ausführbare Steuerprogramm manipuliert werden würde, so könnte dies anhand der Integritätsprüfinformation erkannt werden. Es kann daraufhin insbesondere ein Alarmsignal bereitgestellt werden und/oder die Ausführung des Steuerprogramms kann beendet werden, vorzugsweise durch Terminieren des entsprechenden Betriebssystem-Prozesses.

Diese Integritätsprüfinformation ermöglicht es also, zuverlässig die Integrität und die Vertrauenswürdigkeit eines ausführbaren Steuerprogramms zu prüfen, bevor oder während es ausgeführt wird. Zusätzlich kann die Integritätsprüfinformation für eine spätere Auditierung in einem Log-Server, in einer Datenbank oder einem Distributed Ledger, d. h. einer Blockchain-Infrastruktur, abgelegt werden.

Bevorzugt wird bei dem Verfahren in einer Weiterbildung der Erfindung das ausführbare Steuerprogramm auf derjenigen Steuerung in der vertrauenswürdigen Ausführungsumgebung kompiliert, welche mit dem ausführbaren Steuerprogramm programmiert wird.

Die Übersetzung kann in einer vertrauenswürdigen Ausführungsumgebung des gleichen Systems erfolgen, auf dem der generierte Programmcode ausgeführt wird.

Alternativ und ebenfalls bevorzugt wird bei dem Verfahren gemäß der Erfindung das Steuerprogramm nicht auf derjenigen Steuerung in der vertrauenswürdigen Ausführungsumgebung kompiliert, welche mit dem ausführbaren Steuerprogramm programmiert wird. Insbesondere können als vertrauenswürdige Ausführungsumgebung und als speicherprogrammierbare Steuerung räumlich getrennte, unterschiedliche Geräte herangezogen werden, die miteinander in Kommunikationsverbindung stehen.

Die erfindungsgemäße speicherprogrammierbare Steuerungsanlage ist zur Ausführung eines erfindungsgemäßen Verfahrens zum Programmieren einer speicherprogrammierbaren Steuerung mittels eines ausführbaren Steuerprogramms, wie es oben beschrieben ist, ausgebildet, wobei die speicherprogrammierbare Steuerungsanlage eine speicherprogrammierbaren Steuerung und eine vertrauenswürdige Ausführungsumgebung aufweist, wobei die vertrauenswürdige Ausführungsumgebung einen Kompilator aufweist, welcher zur Kompilation zumindest eines Teils eines Zwischenprogrammtextes ausgebildet ist, und wobei die speicherprogrammierbare Steuerungsanlage einen Projektierer aufweist, welcher ausgebildet ist, den kompilierten Zwischentext auf die speicherprogrammierbare Steuerung zu laden.

Bevorzugt ist die speicherprogrammierbare Steuerungsanlage einstückig, d. h. einteilig, handhabbar.

Die vertrauenswürdige Ausführungsumgebung kann Teil desselben Geräts sein, auf dem das ausführbare Steuerprogramm ausgeführt wird, d. h. Teil der speicherprogrammierbaren Steuerung sein. Alternativ und ebenfalls bevorzugt sind vertrauenswürdige Ausführungsumgebung und speicherprogrammierbare Steuerung räumlich getrennte, unterschiedliche Geräte, die miteinander in Kommunikationsverbindung stehen. So ist es z.B. möglich, dass die Übersetzung und/oder die Ausführung in einer virtualisierten Edge/Backend-Cloud-Umgebung erfolgt/erfolgen.

Nachfolgend wird die Erfindung anhand eines in der Zeichnung dargestellten Ausführungsbeispiels näher erläutert.

Die einzige Zeichnungsfigur 1 zeigt ein Automatisierungsnetzwerk mit erfindungsgemäßen Steueranlagen mit je einer speicherprogrammierbaren Steuerung PLC1, PLC2 zur Ausführung des erfindungsgemäßen Verfahrens schematisch in einer Prinzipskizze.

Die Steuerungsanlagen umfassen neben den speicherprogrammierbaren Steuerungen PLC1, PLC2 jeweils Sensoren S und Aktoren A, welche mit den speicherprogrammierbaren Steuerungen PLC1, PLC2 gesteuert werden.

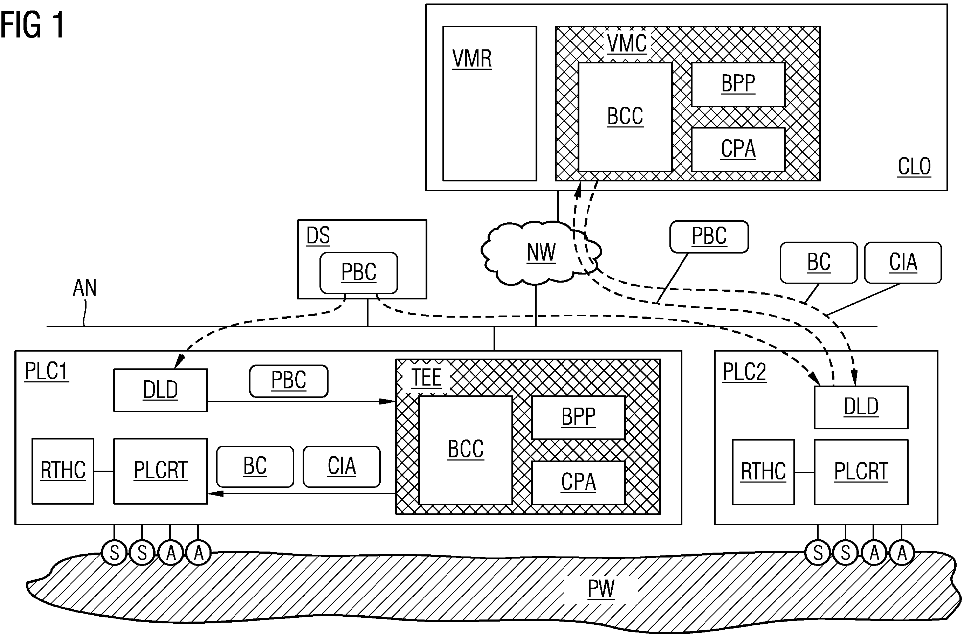

In Fig. 1 sind zwei unterschiedliche Ausführungsbeispiele der erfindungsgemäßen Steueranlagen gleichzeitig verwirklicht. Dazu sind sämtliche erfindungsgemäßen Steueranlagen über ein Automatisierungsnetzwerk AN miteinander verbunden.

In einem ersten Ausführungsbeispiel (unten links in Fig. 1 gezeigt) umfasst die speicherprogrammierbare Steuerung PLC1 eine Downloadkomponente DLD, welche in an sich bekannter Weise eingerichtet ist, einen Bytecode PBC von einem an das Automatisierungsnetzwerk AN angebundenen Downloadserver DS herunterzuladen.

In der speicherprogrammierbaren Steuerung PLC1 wird der heruntergeladene Bytecode PBC einer vertrauenswürdigen Ausführungsumgebung TEE übermittelt. Die vertrauenswürdige Ausführungsumgebung TEE ist dabei in der Art eines "Trusted Execution Environment" gebildet und insbesondere als hardwaregeschützte vertrauenswürdige Ausführungsumgebung TEE realisiert.

Die vertrauenswürdige Ausführungsumgebung TEE weist einen Bytecode-Compiler BCC auf, welcher den übermittelten Bytecode PBC innerhalb der vertrauenswürdigen Ausführungsumgebung TEE entgegennimmt. Die vertrauenswürdige Ausführungsumgebung TEE schützt in Hardware kryptographisch den ausführbaren Compilercode des Bytecode-Compilers BCC, sodass der Bytecode-Compiler BCC mittels eines kryptographischen Integritätsschutzes BPP geschützt ist. Der kryptographischen Integritätsschutz BPP ist eine Hardware-geschützte Komponente, der die Integrität des Bytecode-Compilers BCC schützt, bevor er ausgeführt wird oder während er ausgeführt wird. Der Programmcode des Bytecode-Compilers BCC kann durch eine kryptographische Prüfsumme geschützt sein, die durch den kryptographischen Integritätsschutz BPP überprüft wird, oder er kann verschlüsselt sein und durch den kryptographischen Integritätsschutz BPP zur Ausführung in der vertrauenswürdige Ausführungsumgebung TEE entschlüsselt werden. Weiterhin oder alternativ ist es möglich, dass der Arbeitsspeicher, in dem der Bytecode-Compiler BCC bei seiner Ausführung gespeichert ist, Hardware-geschützt verschlüsselt ist. Beim Laden des verschlüsselten Programmcodes des Bytecode-Compilers BCC in den Prozessorbaustein, auf dem die vertrauenswürdigen Ausführungsumgebung TEE realisiert ist, wird der Programmcode entschlüsselt, sodass er ausgeführt werden kann. Dazu wird im dargestellten Ausführungsbeispiel zumindest ein kryptographischer Schlüssel verwendet, der spezifisch für die Instanz der TEE-Ausführungsumgebung ist, d.h. spezifisch für den konkreten Compilercode des Bytecode-Compilers BCC. Die Verschlüsselungsfunktionen und die Schlüsselspeicherung und Schlüsselbildung erfolgen dabei in Hardware in einem Prozessor der Plattform, sodass die Realisierung vor softwarebasierten Angriffen geschützt ist. Der zum Schutz des in der vertrauenswürdigen Ausführungsumgebung ausgeführten Compilercodes verwendete Schlüssel ist dabei nur dann nutzbar, wenn gerade dieser entsprechende Compilercode in der TEE ausgeführt wird. Wenn ein anderer Compilercode ausgeführt wird, ist der Schlüssel nicht nutzbar, und somit ist der Bytecode PBC durch einen alternativen Compiler nicht kompilierbar oder entschlüsselbar. Der Bytecode kann also nur durch den in der vertrauenswürdigen Ausführungsumgebung ausgeführten Compilercode verarbeitet werden. Die vertrauenswürdige Ausführungsumgebung TEE kann eine kryptographische Prüfsumme oder einen kryptographischen Prüfwert, etwa eine digitale Signatur oder einen Message Authentication Code oder einen kryptographischen Hash-Value, des Compilercodes prüfen, bevor er in der vertrauenswürdigen Ausführungsumgebung ausgeführt wird. Dadurch ist gewährleistet, dass der in der vertrauenswürdigen Ausführungsumgebung ausgeführte Compilercode nicht manipuliert ist.

Zusätzlich umfasst die vertrauenswürdige Ausführungsumgebung TEE einen Compilerprozess-Attestierer CPA, der beispielsweise ebenfalls mittels eines kryptographischen Integritätsschutzes BPP geschützt ist und grundsätzlich als Softwareprogramm in der vertrauenswürdigen Ausführungsumgebung TEE realisiert sein kann. Dieser Compilerprozess-Attestierer CPA ist ausgebildet, eine kryptographisch geschützte Bestätigungsinformation zu generieren und bereitzustellen.

Diese kryptographische Bestätigungsinformation umfasst zum einen eine Information, in welcher Art von vertrauenswürdiger Ausführungsumgebung TEE die Übersetzung erfolgt ist, d. h. ob es sich überhaupt, wie vorliegend, um eine vertrauenswürdige Ausführungsumgebung TEE handelt und welcher technischen Realisierungsart die vertrauenswürdige Ausführungsumgebung TEE entspricht.

Optional ist im dargestellten Ausführungsbeispiel in der kryptographischen Bestätigungsinformation eine Information zur Instanz, also eine Identifikation, der vertrauenswürdigen Ausführungsumgebung TEE und/oder ein Zeitpunkt des Kompilationsvorgangs durch den Bytecode-Compiler BCC und/oder ein Zählerwert des Kompilationsvorgangs enthalten.

Weiterhin enthält die kryptographische Bestätigungsinformation eine Information zu der Instanz des Bytecode-Compilers BCC, hier eine Identifikation und eine Version des Bytecode-Compilers BCC.

Zudem enthält die kryptographische Bestätigungsinformation eine Information zum übersetzten Bytecode, d. h. vom Bytecode PBC vor der Übersetzung mittels des Bytecode-Compilers BCC, im dargestellten Ausführungsbeispiel einen Bezeichner des Bytecodes PBC, einen kryptographischen Hash-Wert des Bytecodes PBC, den Downloadserver DSD, von dem der Bytecode PBC heruntergeladen worden ist, sowie optional eine Information zu einem ggf. vorhandenen Baustein-Schutz des Bytecodes PBC.

Weiterhin enthält die kryptographische Bestätigungsinformation Informationen über die gewählten Compile-Optionen des Bytecode-Compilers BCC, hier aktivierte Security-Optionen zur Härtung des Programmcodes, beispielsweise Shadow Stack und/oder Memory-Layout-Randomization ASLR und/oder Pointer Authentication und/oder eine Nutzung von Branch Target Indicators.

Zudem enthält die kryptographische Bestätigungsinformation eine Integritätsprüfinformation eines aus den Bytecode PBC generierten kompilierten ausführbaren Binarycodes BC des Bytecode-Compilers BCC, beispielsweise ein oder mehrere Hash-Werte des generierten ausführbaren Binarycodes BC. Diese Hash-Werte können beim Start oder während der Ausführung des ausführbaren Binarycodes BC überprüft werden, um die Integrität des ausführbaren Binarycodes BC zu überwachen. Falls durch einen Angriff, z.B. durch Ausnutzen einer Schwachstelle, der sich im Arbeitsspeicher befindende, ausführbare Binarycode BC manipuliert werden würde, so würde dies erkannt werden, da sich die Hash-Werte entsprechend ändern würden. Es kann in diesem Falle beispielsweise ein Alarmsignal bereitgestellt werden oder die Ausführung des ausführbaren Binarycodes kann beendet werden, beispielsweise durch Terminieren eines entsprechenden Betriebssystem-Prozesses.

Die speicherprogrammierbare Steuerung PLC1 verwendet den darin vorliegenden Bytecode-Compiler BCC für die Übersetzung des Bytecodes PBC in einen auf der PLC1 ausführbaren Binarycode BC. Die Kommunikation erfolgt dabei kryptographisch geschützt, hier beispielsweise mittels eines TLS-Protokolls (TLS = engl. "Transport Layer Security"), nämlich authentisiert, integritätsgeschützt und verschlüsselt.

Zusätzlich zur kryptographischen Bestätigungsinformation des Compilerprozess-Attestierers CPA erhält die speicherprogrammierbare Steuerung PLC außerhalb der vertrauenswürdigen Ausführungsumgebung eine Code-Integrity-Attestierung CIA, die der Bytecode-Compiler BCC zusammen mit dem ausführbaren Binarycode BC übergibt.

Der Code-Integrity-Attestierer CIAT ist beispielsweise ebenfalls als Software ausgebildet und ist ein Teil des Bytecode-Compilers BCC und stellt eine dem von dem Bytecode-Compiler BCC kompilierten ausführbaren Binarycode BC zugeordnete kryptographisch geschützte Code-Integrity-Attestierung CIA bereit.

Nachfolgend wird der ausführbare Binarycode BC einem programmierbaren Speicher der speicherprogrammierbaren Steuerung PLC1 übergeben, d. h. der Speicher wird mit dem Binarycode BC programmiert.

Während der Ausführung des Binarycodes BC im Speicher der speicherprogrammierbaren Steuerung PLC1 wird der Binarycode BC, im dargestellten Beispiel von einer Runtime-Health-Check-Komponente RTHC, hinsichtlich der Zulässigkeit und Integrität überwacht.

Alternativ kann wie bei der speicherprogrammierbaren Steuerung PLC2 rechts unten in Fig. 1 dargestellt die Runtime-Health-Check-Komponente RTHC in einer regulären Ausführungsumgebung der speicherprogrammierbaren Steuerung PLC2 ausgeführt werden. Ebenfalls ist es in einem weiteren, nicht dargestellten, Ausführungsbeispiel, welches im Übrigen dem dargestellten Ausführungsbeispiel entspricht, möglich, dass die Runtime-Health-Check-Komponente RTHC in einer vertrauenswürdigen Ausführungsumgebung TEE der speicherprogrammierbaren Steuerung PLC2 ausgeführt wird. Der im Arbeitsspeicher gespeicherte, ausgeführte Binarycode BC einer auf der speicherprogrammierbaren Steuerung PLC2 programmierten Steuerungsapplikation kann dabei durch eine Laufzeitumgebung PLCRT der Steuerungsanlage PLC2 als Ganzes oder abschnittsweise in Teilblöcken der Runtime-Health-Check-Komponente RTHC zur Überprüfung übermittelt werden. Im dargestellten Ausführungsbeispiel ist es möglich, statt des eigentlichen Binarycodes BC der Steuerungsapplikation oder eines Blocks der Steuerungsapplikation eine Prüfsumme, hier beispielsweise einen kryptographischen Hash-Wert, zu bilden und lediglich diesen der Runtime-Health-Check-Komponente RTHC zur Überprüfung zu übermitteln. Weiterhin ist es möglich, dass die Runtime-Health-Check-Komponente RTHC einen direkten Speicherzugriff, beispielsweise einen DMA (DMA = engl. "direct memory access") ausführt und den zur Ausführung bestimmten ausführbaren Binarycode BC ausliest und überprüft.

Bei dem in Fig. 1 dargestellten Ausführungsbeispiel ist die links dargestellte speicherprogrammierbaren Steuerung PLC1 ein reales Gerät. Die rechts abgebildete speicherprogrammierbare Steuerung PLC2 hingegen ist ein virtualisiertes Gerät.

Bei dem realen Gerät mit der speicherprogrammierbaren Steuerung PLC1 ist die vertrauenswürdige Ausführungsumgebung TEE direkt auf den realen Gerät einstückig mit der speicherprogrammierbaren Steuerung PLC1 realisiert. Bei der speicherprogrammierbaren Steuerung PLC2 des virtualisierten Geräts hingegen ist die vertrauenswürdige Ausführungsumgebung TEE cloudbasiert, d. h. in einer Cloud CLO realisiert, und mittels des Internets NW an das Automatisierungsnetzwerk AN angebunden. Die vertrauenswürdige Ausführungsumgebung TEE ist hier als virtualisierte vertrauenswürdige Ausführungsumgebung VMC realisiert, die zusätzlich zu sonstigen virtualisierten Komponenten VMR cloudbasiert vorliegt. Die virtualisierte vertrauenswürdige Ausführungsumgebung VMC steht mit der speicherprogrammierbaren Steuerung PLC2 des virtualisierten Geräts über das Internet NW und das Automatisierungsnetzwerk AN in Kommunikationsverbindung, wobei der Datentransfer im Übrigen gleichartig erfolgt wie bei der speicherprogrammierbaren Steuerung PLC1 des realen Geräts. Allerdings ist im dargestellten Ausführungsbeispiel der Code-Integrity-Attestierer CIAT als separate Komponente mit der speicherprogrammierbaren Steuerung PLC2 des virtualisierten Geräts und mit der virtualisierten vertrauenswürdigen Ausführungsumgebung VMC in kryptographisch geschützter Kommunikationsverbindung.

## Patentansprüche

1. Verfahren zum Programmieren einer speicherprogrammierbaren Steuerung (PLC1, PLC2) mittels eines ausführbaren Steuerprogramms (BC), bei welchem ein Zwischenprogrammtext (PBC), zumindest zum Teil, in einer vertrauenswürdigen Ausführungsumgebung (TEE, VMC) zum ausführbaren Steuerprogramm (BC) kompiliert wird und die speicherprogrammierbare Steuerung (PLC1, PLC2) mit dem ausführbaren Steuerprogramm (BC) programmiert wird.

2. Verfahren nach einem der vorhergehenden Ansprüche, bei welchem der Zwischenprogrammtext (PBC) ein hardwareunabhängiger Zwischenprogrammtext ist.

3. Verfahren nach einem der vorhergehenden Ansprüche, bei welchem das ausführbare Steuerprogramm (BC) einen ausführbaren Binärcode bildet oder umfasst.

4. Verfahren nach einem der vorhergehenden Ansprüche, bei welchem die vertrauenswürdige Ausführungsumgebung (TEE) ein Trusted Execution Environment ist.

5. Verfahren nach einem der vorhergehenden Ansprüche, bei welchem das ausführbare Steuerprogramm (BC) mittels eines Kompilators (BCC) kompiliert wird und der Kompilator (BCC) in der vertrauenswürdigen Ausführungsumgebung (TEE, VMC) kryptographisch geschützt ist.

6. Verfahren nach einem der vorhergehenden Ansprüche, bei welchem der Kompilierer mittels Hardware in der vertrauenswürdigen Ausführungsumgebung (TEE, VMC) geschützt ist.

7. Verfahren nach einem der vorhergehenden Ansprüche, bei welchem das kompilierte ausführbare Steuerprogramm (BC) mittels einer kryptographischen Attestierungsinformation (CIA) attestiert wird.

8. Verfahren nach einem der vorhergehenden Ansprüche, bei welchem das ausführbare Steuerprogramm (BC) auf derjenigen speicherprogrammierbaren Steuerung (PLC1, PLC2) in der vertrauenswürdigen Ausführungsumgebung (TEE, VMC) kompiliert wird, welche mit dem ausführbaren Steuerprogramm (BC) programmiert wird.

9. Verfahren nach einem der vorhergehenden Ansprüche, bei welchem das Steuerprogramm nicht auf derjenigen speicherprogrammierbaren Steuerung (PLC1, PLC2) in der vertrauenswürdigen Ausführungsumgebung (VMC) kompiliert wird, welche mit dem ausführbaren Steuerprogramm (BC) programmiert wird.

10. Speicherprogrammierbare Steuerungsanlage zur Ausführung eines Verfahrens zum Programmieren einer speicherprogrammierbaren Steuerung (PLC1, PLC2) mittels eines ausführbaren Steuerprogramms (BC), mit einer speicherprogrammierbaren Steuerung (PLC1, PLC2) und mit einer vertrauenswürdigen Ausführungsumgebung (TEE, VMC), bei welchem die vertrauenswürdige Ausführungsumgebung (TEE, VMC) einen Kompilator (BCC) aufweist, welcher zur Kompilation zumindest eines Teils eines Zwischenprogrammtextes (PBC) ausgebildet ist, wobei die speicherprogrammierbare Steuerungsanlage einen Projektierer (PLCRT) aufweist, welcher ausgebildet ist, den kompilierten Zwischentext auf die speicherprogrammierbare Steuerung (PLC1, PLC2) zu laden.

11. Speicherprogrammierbare Steuerungsanlage nach dem vorhergehenden Anspruch, welche einstückig handhabbar ist.
